# EUROPÄISCHE PATENTSCHRIFT

(11) **EP 2 107 274 B1**
(45) Veröffentlichungstag und Bekanntmachung des Hinweises auf die Patenterteilung: **14.03.2012**
(21) Anmeldenummer: 08153756.5
(22) Anmeldetag: 31.03.2008
(51) Int. Cl.: F16H 25/22, F16H 25/20

(54) **Wälzelement und Getriebe zur Umwandlung einer Drehbewegung in eine Längsbewegung**
Roller element and drive for transforming a turning movement into a longitudinal movement
Elément de cylindre et entraînement destinés à la transformation d'un mouvement rotatif en déplacement en longueur

(43) Veröffentlichungstag der Anmeldung: 07.10.2009
(73) Patentinhaber: Nozag AG, 8330 Pfäffikon (CH)
(72) Erfinder: Bosshart, Rolf, 8344 Bäretswil (CH)
(74) Vertreter: Liebetanz, Michael

(56) Entgegenhaltungen:
- EP-A- 0 024 043
- DE-A1- 19 515 093
- GB-A- 1 281 143
- US-A- 2 556 572
- US-A- 3 730 016

## Beschreibung

### Technisches Gebiet der Erfindung

Die vorliegende Erfindung betrifft eine Wälzmutter und ein Getriebe zur Umwandlung einer Drehbewegung in eine Längsbewegung gemäss den Merkmalen des Oberbegriffs des Anspruchs 1 bzw. 13.

### Stand der Technik

Aus dem Stand der Technik sind mechanische Systeme bekannt, welche zur Erzeugung von linearen Bewegungen rotierende Motoriken verwenden. Derartige mechanische System lassen sich auch als Arbeitsmechanik oder Stellmechanik bezeichnen, da eine Last bewegt und in eine bestimmten Position gebracht wird. Die genannten Systeme dienen zur Erzeugung von Linearbewegungen bzw. Linearkräften (Anheben von Lasten), zu Stell- und Regelzwecken (Positionieren von Lasten) oder zur Herstellung von Raumänderungsarbeit. Die genannten mechanischen Systeme sind dem Fachmann auch als Hubsysteme oder Hubgetriebe bekannt.

Die Eingangs genannten mechanischen Systeme umfassen typischerweise eine Plattform oder ein ähnliches Element, auf welcher die Last aufliegt oder eine Stellkraft abgenommen werden kann, wobei die Plattform durch eine Mittel positioniert (z.B. angehoben bzw. abgesenkt) werden kann. Das Mittel der genannten Art umfasst typischerweise eine Gewindespindel (z.B. Hubspindel), eine Gewindemutter, sowie einen Antriebsmotor, welcher über ein geeignetes Getriebe eine Drehbewegung auf die Spindel gibt. Die Gewindemutter ist mit der Plattform fest verbunden und aus der eine Drehbewegung der Spindel resultiert eine Verschiebung der Gewindemutter in Richtung der Spindelachse.

Die genannten und aus dem Stand der Technik bekannten mechanischen Systeme sind einfach und flexibel einsetzbar. Zudem zeichnen sich die bekannten vorher genannten mechanischen Systeme z.B. als Hubegetriebe durch eine zuverlässige Arbeitsweise aus. Die systembedingte hohe Reibung zwischen Mutter und Spindel, sowie antriebsseitig zwischen Motor und Getriebe (z.B. Schneckengetriebe) erfordert allerdings eine vergleichsweise hohe Antriebsleistung. Aufgrund der hohen Antriebsleistung müssen auch die Maschinenelemente entsprechend dimensioniert werden, was die Herstellung teuer macht.

Aus dem Stand der Technik sind Muttern bekannt, welche geringere Reibungsverluste zwischen Mutter und Spindel aufweisen. Beispielhaft seien hier Kugelumlaufspindeln oder Wälzringmuttern genannt.

Ferner sei hier die DE 195 15 093 genannt, welche eine Arbeits- oder Stellmechanik mit einer Wälzringmutter zeigt. Dabei ist die Wälzringmutter exzentrisch zur Spindel angeordnet, was dazu führt, dass zwischen den Gewindeflanken der Mutter und der Spindel eine Wälzbewegung resultiert. Die Wälzbewegung bewirkt zugleich eine kräftige bzw. grosse Axialverschiebung der Gewindemutter in Abhängigkeit der insgesamt zurückgelegten Wälzwinkel, sowie in Abhängigkeit von der Grösse der Gewindesteigung. Hieraus kann auch ein ungünstiges Übersetzungsverhältnis resultieren. Eine solche Wälzbewegung reduziert die Reibung zwischen Mutter und Spindel massiv. Es können daher grössere Lasten bei gleich bleibender Motorenleistung bewegt werden.

Weitere Nachteile aus den oben genannten Systemen ergehen aus der relativ hohen Reibung zwischen Mutter und Spindel. Die hohe Reibung bringt eine grosse Abnützung von Mutter und Spindel mit sich. Bei grosser Abnützung der Spindel oder der Gewindemutter kann radiales und auch axiales Spiel entstehen. Dies wirkt sich negativ auf den Wirkungsgrad und die Präzision des Getriebes aus. Ein weiterer Nachteil ergeht aus der Tatsache, dass die Montage und insbesondere die Ausrichtung der einzelnen Komponenten kompliziert und daher teuer sind.

Die reibungsbedingte Oberflächenangleichung der Gewindeflanken führt zudem bei Systemen der vorgenannten Art und Patentanmeldung zum Kontakt- und Kraftverlust an den Gewindeoberflächen.

Bei fortschreitender Abnutzung kann der Fall eintreten, bei welchem die wirksame Exzentrizität zwischen Wälzmutter und Spindel aufgehoben wird. Der Vorteil der Wälzbewegung wird dabei zunichte gemacht und das System verliert seine gewünschte mechanische Funktion.

Die US 3,730 016 welche als der nächste Stand der Technik angesehen wird, offenbart die technischen Merkmale des Oberbegriffs des Anspruchs 1. Es handelt sich um ein mechanisches System, welches sich mit der Verminderung der Reibung bei der Umwandlung einer Rotationsbewegung in eine Linearbewegung beschäftigt.

### Darstellung der Erfindung

Ausgehend von diesem Stand der Technik liegt der Erfindung die Aufgabe zugrunde, ein Wälzelement anzugeben, welches die Nachteile des Standes der Technik überwindet. Insbesondere soll das Wälzelement derart ausgebildet sein, dass radiales Spiel zwischen Wälzelement und einer Spindel kompensierbar ist.

Diese Aufgabe löst ein Wälzelement mit den Merkmalen des Patentanspruchs 1. Vorteilhafte Ausgestaltungen der Erfindung sind in den abhängigen Ansprüchen angegeben.

Demgemäss umfasst ein Wälzelement, das auch als Wälzhülsenmutter bezeichnet werden kann, für eine Arbeits- oder Stellmechanik eine Wälzmutter mit einer Mittelachse und einem koaxial dazu verlaufenden Innengewinde zur Interaktion mit einem Aussengewinde einer Spindel, ein Wälzmutterlager zur Lagerung der Wälzmutter und ein Gehäuse zur Aufnahme des Wälzmutterlagers. Das Gehäuse umfasst einen Innenraum mit einer Innenraumachse, wobei eine Spindel koaxial zur Innenraumachse durch diesen Innenraum hindurchführbar ist. Ein Federmittel ist zwischen Gehäuse und Wälzmutterlager angeordnet, dessen resultierende Federkraft einseitig in radialer Richtung über das Wälzmutterlager auf die Wälzmutter wirkt, so dass die Mittelachse der Wälzmutter exzentrisch zur Innenraumachse und demnach zur Spindel liegt.

Durch die Anordnung des Federmittels werden das radiale Spiel zwischen Spindel und Wälzmutter kompensierbar, wodurch die Nachteile der Vorrichtungen aus dem Stand der Technik entfallen. Aufgrund der exzentrischen Anordnung resultiert eine Wälzbewegung zwischen Spindel und Mutter. Insbesondere haben solche exzentrische Anordnungen den Vorteil, dass der Wirkungsgrad des Getriebes verbessert wird, da die Reibungskräfte zwischen Spindel und Mutter reduziert werden. Dadurch kann die Antriebsleistung eines beispielsweise elektrischen Antriebes bei gleich bleibender Belastung der Spindel und Mutter reduziert werden. Zudem kann die Einschaltdauer eines elektrischen Antriebes erhöht werden.

Durch die Anordnung aller Bauteile in einem einzigen Gehäuse wird ein besonders kompaktes und einfach handhabbares Wälzelement bereitgestellt.

Vorzugsweise ist der Durchmesser des Gehäuses an der Stelle, an welcher das Wälzmutterlager zu liegen kommt, grösser als der maximale Aussendurchmesser des Wälzmutterlagers.

Vorzugsweise umfasst das Gehäuse eine Ausnehmung, in welcher Teile des Wälzmutterlagers, insbesondere der Aussenring angeordnet sind, wobei die Ausnehmung exzentrisch zur Innenraumachse angeordnet ist, so dass die Exzentrizität des Wälzmutterlagers und der Wälzmutter zur Spindel durch die exzentrische Anordnung des Wälzmutterlagers und durch das Federmittel erzielt wird.

Der Aussenring des Wälzmutterlagers ist demnach im oder am Gehäuse in axialer Richtung abgestützt. Die Exzentrizität der Ausnehmung kann beispielsweise durch das Vorsehen eines segmentartigen Elementes zwischen Aussenring des Wälzlagers und Ausnehmung oder aber durch blosse Formgebung der Ausnehmung erzielt werden.

Vorzugsweise umfasst das Gehäuse eine Ausnehmung, in welcher Ausnehmung Teile des Wälzmutterlagers, insbesondere der Aussenring, angeordnet sind, wobei die Ausnehmung koaxial zur Innenraumachse angeordnet ist, so dass die Exzentrizität des Wälzmutterlagers und der Wälzmutter zur Spindel nur durch das Federmittel erzielt wird.

Das Federmittel ist demnach zwischen Aussenring und Ausnehmung angeordnet.

Bevorzugterweise ist das Federmittel derart ausgebildet, dass die Federkraft über ein Kreissegment mit einem Öffnungswinkel von 30° bis 160°, insbesondere 45° bis 145°, auf das Wälzmutterlager aufgebracht wird.

Vorzugsweise wird der Kraftfluss einer Lasteinwirkung auf das Gehäuse vom Gehäuse über das Wälzmutterlager auf die Wälzmutter und von der Wälzmutter auf die Spindel geleitet.

Vorzugsweise ist das Wälzmutterlager im Gehäuse schwimmend gelagert und daher senkrecht zur Innenraumachse bezüglich dem Gehäuse verschiebbar, so dass aufgrund der radialen Federkraft der Federmittel die Wälzmutter konstant an einer Spindel angedrückt wird.

Vorzugsweise umfasst das Wälzmutterlager mindestens einen Innenring und einen Aussenring, welche relativ zueinander drehbar sind, wobei der Aussenring im Gehäuse gelagert ist, so dass eine Axialkraft von Gehäuse auf den Aussenring übertragbar ist, und wobei der Innenring mit der Wälzmutter derart verbunden ist, dass eine Axialkraft übertragbar ist. Die Axialkraft kann dabei alternieren.

Weitere vorteilhafte Ausführungsformen sind in den Unteransprüchen gekennzeichnet.

Ein Getriebe zur Umwandlung einer Drehbewegung in eine Längsbewegung, wobei das Getriebe ein Wälzelement gemäss der obigen Beschreibung und eine Spindel umfasst, wobei die Wälzmutter ein Gewinde aufweist, welches mit der Spindel im Eingriff ist. Das Getriebe kann auch als Wälzmuttergetriebe bezeichnet werden. Das Getriebe bzw. das Wälzelement stellen eine wesentliche Verbesserung des Wirkungsgrades bereit.

Weitere vorteilhafte Ausführungsformen sind in den Unteransprüchen gekennzeichnet.

### Kurze Beschreibung der Zeichnung

Bevorzugte Ausführungsformen werden im folgenden anhand der Zeichnung beispielhaft näher beschrieben. Es zeigen:
- Fig. 1: eine Schnittdarstellung eines ersten Ausführungsbeispiels eines erfindungs- gemässen Getriebes entlang einer Mittelachse;
- Fig. 2: eine perspektivische und teilweise geschnittene Ansicht des Getriebes nach Figur 1;
- Fig. 3: eine Schnittdarstellung senkrecht zur Mittelachse des Getriebes nach Figur 1;
- Fig.4: eine Schnittdarstellung eines zweiten Ausführungsbeispiels eines erfin- dungsgemässen Getriebes entlang einer Mittelachse; und
- Fig. 5: eine Schnittdarstellung senkrecht zur Mittelachse des Getriebes nach Figur 4.

### Beschreibung von bevorzugten Ausführungsbeispielen

Mit Bezug zu den Zeichnungen werden mögliche Ausführungsbeispiele beschrieben. Die Zeichnungen und die Beschreibung zeigen bevorzugte Ausführungsbeispiele und sollten nicht ausgelegt werden, um die Erfindung einzuschränken, welche durch die Ansprüche definiert ist.

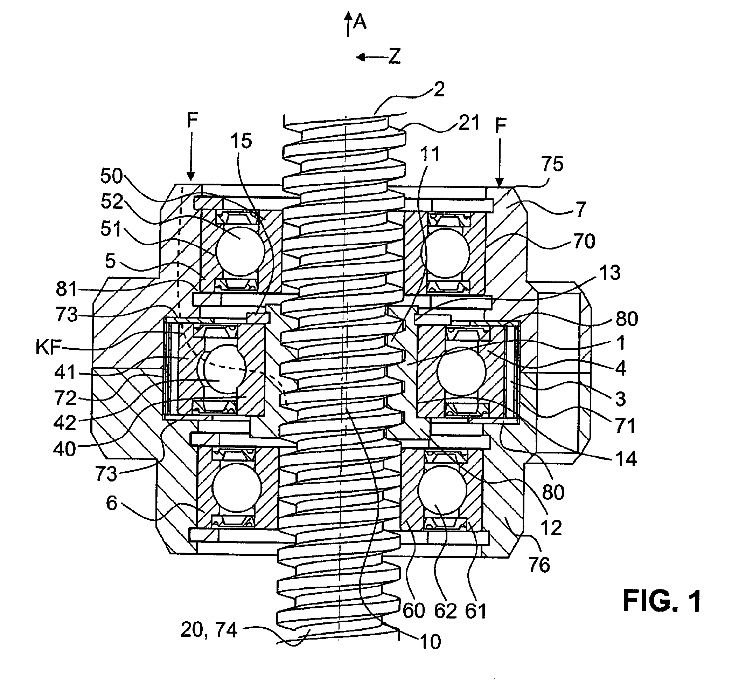

Figur 1 zeigt ein erstes Ausführungsbeispiel eines Getriebes zur Umwandlung einer Drehbewegung in eine Längsbewegung. Das dargestellte mechanische System oder Getriebe umfasst im wesentlichen ein Wälzelement, welches auch als Wälzhülsenmutter bezeichnet werden kann, und eine Spindel 2.

Das Wälzelement umfasst eine Wälzmutter 1 mit Innengewinde 11, ein Federmittel 3, eine Wälzmutterlagerung 4 und ein Gehäuse 7. Die Funktion und Ausbildung des erfindungsgemässen Wälzelementes bzw. Getriebes wird untenstehend genauer erklärt. In der nachfolgenden Beschreibung wird als zentripetale oder radiale Richtung R die Richtung verstanden, welche senkrecht zur Spindel 2 bzw. der Mittelachse 20 der Spindel 2 zum Mittelpunkt der Spindel 2, also zu der jeweiligen Achse hin verläuft. Als axiale Richtung A wird die Richtung verstanden, welche parallel zur Mittelachse 20 der Spindel 2 verläuft.

Das erfindungsgemässe Getriebe, auch als Schraubgetriebe oder Wälzmuttergetriebe bezeichnet, kann beispielsweise als Hubgetriebe oder als Lineargetriebe für allgemeine Zwecke eingesetzt werden. Dabei wird das Gehäuse 7 bzw. das Wälzelement selbst beispielsweise mit einer nicht dargestellten Plattform verbunden oder liegt an dieser an, wobei die Spindel 2 ist über eine Lagerung in axialer Richtung fest abgestützt und in radialer Richtung drehbar gelagert ist. Dadurch wird die Plattform über das erfindungsgemässe Getriebe positioniert und fixiert bzw. gelagert. Sobald eine Drehbewegung auf die Spindel 2 wirkt, resultiert aufgrund des Gewindes 21 zwischen Wälzelement bzw. der Wälzmutter 1 und der Spindel 2 sowie der lagefixierten Anordnung des vorgenannten Wälzelementes zur Plattform eine Längsbewegung des Wälzelementes entlang der Mittelachse 20 der Spindel 2. Mit anderen Worten kann auch gesagt werden, dass zwischen dem Gewinde der Spindel 1 und dem Gewinde der Wälzmutter 2 aufgrund der unten beschriebenen Exzentrizität zwischen Spindel 1 und Wälzmutter 2 eine Wälzbewegung als auch eine Längsbewegung resultiert. Aufgrund der Wälzbewegung bewegt sich demnach die Plattform von einer ersten lagefixierten Position in eine zweite lagefixierte Position. Alternativ kann die Drehbewegung auch über die Wälzmutter 2 mit dem gleichen Effekt eingekoppelt werden.

Die Wälzmutter 1 umfasst im Wesentlichen einen zylindrischen Körper mit kreisrunder Grundform. Das Innengewinde 11 erstreckt sich innenseitig durch diesen zylindrischen Körper entlang seiner Mittelachse 10. Ein Flansch oder Kragen 12 erstreckt sich im Bereich einer Stirnseite in radialer Richtung über die Mantelfläche 14 des zylindrischen Körpers. Auf der anderen, dem Flansch 12 in axialer Richtung gegenüberliegenden Stirnseite ist ein Einstich 13 angeordnet, welcher sich von der Mantelfläche 14 des zylindrischen Körpers in denselben hinein erstreckt. Zwischen Flansch 12 und Einstich 13 kann die Mantelfläche 14 auch als Lagerfläche bezeichnet werden, da dieser Abschnitt mit Teilen des Wälzmutterlagers 4 im Eingriff steht bzw. auf diesem aufliegt.

Wie oben erwähnt, umfasst die Spindel 2 eine Mittelachse 20. Ein Aussengewinde 21 erstreckt sich typischerweise über die gesamte hubrelevante Länge der Spindel 2. Das Aussengewinde 21 ist mit dem Innengewinde 11 der Wälzmutter 1 im Eingriff. Demnach weisen das Innengewinde 11 und das Aussengewinde 21 eine korrespondierende Form oder Gestalt auf. Im vorliegenden Ausführungsbeispiel wurde ein Trapezgewinde gewählt. Andere Gewindearten, wie beispielsweise ein metrisches Gewinde, Sägegewinde, Spitzgewinde oder ein Rundgewinde etc. können ebenfalls eingesetzt werden. Besonders gute Resultate wurden im allgemeinen mit Flachgewinden erzielt. Zudem können die genannten Gewinde auch mehrgängig ausgebildet sein.

Der Nenndurchmesser des Innengewindes 11 der Wälzmutter 1 ist in einem definierten Mass etwas grösser als der Nenndurchmesser des Aussengewindes 21 der Spindel 2. Dies resultiert in einem radialen Spiel zwischen der Wälzmutter 1 und der Spindel 2, das heisst, die Wälzmutter 1 und die Spindel 2 lassen sich senkrecht zur entsprechenden Mittelachse 10, 20 relativ zueinander verschieben. Aufgrund dieses radialen Spiels lässt sich mit den unten beschriebenen Mitteln die Exzentrizität zwischen Wälzmutter 1 und Spindel 2 herstellen, so dass die eingangs erwähnte Wälzbewegung realisierbar ist. Vorzugsweise ist der Nenndurchmesser des Innengewindes 11 zwischen 1% und 30%, insbesondere 2% bis 25%, grösser als der Nenndurchmesser des Aussengewindes. Andere Bereiche sind ebenfalls denkbar. Bei einem Nenndurchmesser von 20mm (beispielsweise ein M 20 Gewinde) wäre der Nenndurchmesser des Innengewindes 11 demnach zwischen 20.2 mm und 26 mm sinnvoll.

Das Gehäuse 7 dient im wesentlichen der Aufnahme der Lager- und Lastkräfte, welche in der Figur 1 mit Pfeil oder Vektor F dargestellt sind, als auch der Aufnahme der Wälz- und Stützmittel, wie dies hierin dargelegt wird. Im vorliegenden Ausführungsbeispiel besteht das Gehäuse, welches auch als Wälzhülse bezeichnet werden kann, aus zwei Teilen, nämlich aus einem Oberteil 75 und einem Unterteil 76. Vorzugsweise ist das Gehäuse 7 rotationssymmetrisch ausgebildet. Das Oberteil 75 ist im wesentlichen identisch zum Unterteil 76. Das Gehäuse 7 umfasst einen im wesentlichen zylindrischen Innenraum 70, welcher sich entlang einer Gehäuseachse durch das Gehäuse 7 hindurch erstreckt. Ferner umfasst das Gehäuse 7 eine Ausnehmung 71, welche sich in vom zylindrischen Innenraum 70 in radialer Richtung in das Gehäuse 7 hinein erstreckt. Die Ausnehmung 71 kann auch als umlaufender Kanal bezeichnet werden kann, da sich diese um die Gehäuseachse erstreckt. In radialer Richtung wird die Ausnehmung 71 durch eine Mantelfläche 72 und in axialer Richtung durch zwei Oberflächen 73 begrenzt.

Im Innenraum 70 des Gehäuses 7 sind die Wälzmutter 1, die Feder 3 und das Wälzmutterlager 4 wie untenstehend beschrieben angeordnet. Ferner durchdringt die Spindel 2 das Gehäuse 1 durch den zylindrischen Innenraum 70. Dabei ist das Gehäuse 7 derart ausgebildet bzw. weist Lagerelemente auf, welche das Gehäuse 7 in radialer Richtung lagefixiert zur Spindel 2 ausrichten. Das heisst, die Spindelachse 20 ist kollinear zur Achse, welche durch den zylindrischen Innenraum 70 verläuft. Solche Lagerelemente können beispielsweise das erste Stützlager 5 und das zweite Stützlager 6 sein. Die Stützlager 5, 6 führen und lagern demnach die Spindel 1 in radialer Richtung im Gehäuse 7. Die beiden Stützlager 5, 6 sind oberhalb bzw. unterhalb der Ausnehmung 71 angeordnet. Im vorliegenden Ausführungsbeispiel sind die Stützlager 5, 6 als Wälzlager ausgebildet und umfassen je einen Innenring 50, 60, einen Aussenring 51, 61 und mehrere Wälzkörper 52, 62. Die Innenringe 50, 60 liegen auf einigen Gewindegängen des Aussendurchmessers des Aussengewindes 21 der Spindel 20 auf. Der Innendurchmesser des zylindrischen Innenraumes 70 entspricht im wesentlichen bzw. mindestens dem Aussendurchmesser des Aussenringes 51, 61, so dass die beiden Stützlager 5, 6 in axialer Richtung in den Innenraum 70 eingeführt werden können. In axialer Richtung werden die Stützlager 5, 6 jeweils von Sicherungsringen 81 fixiert. Alternativ können die Stützlager 5, 6 auch als Gleitlager ausgebildet sein. Zudem ist es auch denkbar, auf die Lager zu verzichten und den Durchmesser des Gehäuses 7 im entsprechenden Bereich derart zu wählen, dass dieser im wesentlichen dem Aussendurchmesser der Spindel 2 entspricht. Ferner kann die Oberfläche des Innenraumes 70 als Aussenring dienen. Dabei würde das Gehäuse selbst als Stützlager funktionieren. Die Stützlager dienen somit der Lagefixierung des Gehäuses 7 relativ zur Spindel 2.

Weiterhin können die Innenringe 50, 60 der Stützlager 5, 6 z.B. mit Hilfe gehärteter Hülsen verlängert ausgeführt werden und als Befestigungs- und Fixierstelle für weitere Mechaniken (z.B. weitere Wälzelemente) oder der Befestigung von unterschiedlichen Motoren dienen.

Die Wälzmutter 1 ist über das Wälzmutterlager 4 im Gehäuse 7 gelagert. Das Wälzmutterlager 4 ist im vorliegenden Ausführungsbeispiel als Wälzlager (Radialkugellager) ausgebildet. Dabei umfasst das Wälzlager einen Innenring 40, einen Aussenring 41 und mehrere Wälzkörper 42. Der Innenring 40 und der Aussenring 41 bilden die innere bzw. äussere Pfanne oder Rollwege des Lagers. Die Wälzkörper 42 sind zwischen dem Innenring 40 und Aussenring 41 in jeweiligen Rillen oder Nuten angeordnet, so dass sich der Innenring 40 relativ zum Aussenring 41 bewegen kann. Die Innenseite (Innendurchmesser) des Innenrings 40 ist im Eingriff mit der Mantelfläche 14 der Wälzmutter 1. Der Innenring 40 wird dabei in axialer Richtung durch den Flansch 12 und einen sich im Einstich 13 befindlichen Sicherungsring 15 gesichert. Andere Arten von axialer Sicherung, wie beispielsweise eine Schweissverbindung können auch sinnvoll eingesetzt werden.

Der Aussenring 41 des Wälzmutterlagers 4 ist im wesentlichen in der Ausnehmung 71 im Gehäuse 7 gelagert. Dabei ist die Ausnehmung 71 derart dimensioniert, dass sich der Aussenring 41 in radialer Richtung in einem definierten radialen Spiel verschieben kann bzw. beweglich gehalten ist. Durch die radiale bzw. periphere Beweglichkeit können Rundlaufänderungen der Spindel 2 kompensiert werden. Ferner werden auch Kräfte, beispielsweise Friktionskräfte, aufgebaut und aufrecht erhalten werden. In axialer Richtung ist der Aussenring 41 fest gelagert bzw. fixiert. Innerhalb des radialen Spiels kann die Exzentrizität zwischen Wälzmutter 1 und Spindel 2, wie unten beschrieben, erzielt werden. Im vorliegenden Ausführungsbeispiel ist zwischen dem Aussenring 41 und den Oberflächen 73 je eine Scheibe 80 angeordnet. Vorzugsweise ist die Scheibe 80 aus einem metallischen Werkstoff, insbesondere aus gehärtetem Metall. Dabei kann beispielsweise eine genormte und gehärtete Scheibe eingesetzt werden, was wirtschaftlich vorteilhaft ist. In diesem Fall erfolgt die radiale Verschiebung auf gehärteten Flächen. Mit anderen Worten kann auch gesagt werden, dass das Wälzmutterlager 4 in der Ausnehmung schwimmend gelagert ist. Insbesondere bei geringeren Lasten kann die Scheibe auch aus einem Kunststoff sein.

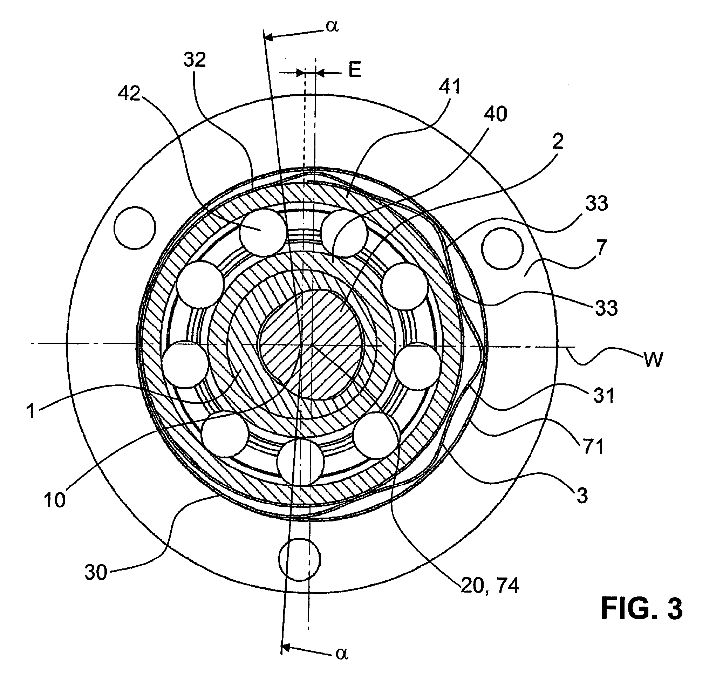

Das Federmittel 3 ist zwischen dem Aussenring 41 und der Mantelfläche 72 in der Ausnehmung 70 angeordnet. Dabei wird das Federmittel 3 derart ausgebildet, dass es einseitig eine Kraft in radialer Richtung vom Innenraum 70 des Gehäuses 7 auf das Wälzmutterlager 4 und demnach auch auf die Wälzmutter 1 aufbringt. Die Kraft in radialer Richtung wird erfindungsgemäss nur über ein Kreissegment mit einem definierten Öffnungswinkel auf den Aussenring 41 aufgebracht. Dies wird anhand der Beschreibung der Figur 3 im Detail beschrieben.

Aufgrund der radialen Verschiebbarkeit des Wälzmutterlagers 4 im Gehäuse 7 zwischen den radial verlaufenden Oberflächen der Scheiben 80, der radialen Lagefixierung des Gehäuses 7 bezüglich der Spindel 2 und dem radialen Spiel zwischen Spindel 2 und Wälzmutter 1, bewirkt das Federmittel 3, dass die Wälzmutter 1 radial und fortlaufend an beliebiger Stelle gegen die Spindel 2 gedrückt wird. Dadurch wird eine exzentrische Anordnung von Wälzmutter 1 und Spindel 2 erreicht, wobei die Wälzmutter 1 radial zur Spindel 2 bewegbar ist. Unter einer exzentrischen Anordnung wird eine Anordnung verstanden, bei welcher die Mittelachse 10 der Wälzmutter 1 in radialer Richtung von der Mittelachse 20 der Spindel 2 verschoben ist. Die beiden Mittelachsen 10, 20 sind demnach nicht kollinear. Durch das Federmittel 3 stellt sich die Exzentrizität selbsttätig ein. Aufgrund dieser radialen Verschiebung wird bewirkt, dass beim Drehen der Spindel 2 relativ zur Wälzmutter 1 beziehungsweise umgekehrt, eine Wälzbewegung zwischen Spindel 2 und Wälzmutter 1 resultiert und aufrechterhalten werden kann. Solche exzentrischen Anordnungen haben, insbesondere aufgrund der Wälzbewegung zwischen Spindel 2 und Wälzmutter 1, den Vorteil, dass der Wirkungsgrad des Getriebes (Wälzelement und Spindel 2) verbessert wird, wobei die Antriebsleistung reduziert werden kann. Üblicherweise werden Getriebe, wie hierin beschrieben, mit einem elektrischen Antrieb mit einem Untersetzungs-Getriebe angetrieben. Aufgrund der Reduktion der Antriebsleistung kann dabei ein Motor mit einer geringeren Antriebsleistung eingesetzt werden. Ferner sei hier angemerkt, dass aufgrund der Wälzbewegung zwischen Spindel 2 und Mutter 1 eine zusätzliche Untersetzung bereitgestellt wird, die die Getriebefunktion mechanisch erlaubt und herstellt. Im allgemeinen kann daher das zusätzliche Untersetzungs-Getriebe zwischen Spindel und Motor kostengünstiger ausgebildet werden bzw. ganz entfallen. Bei einer Reihe von Anwendungen kann daher auf das Untersetzungs-Getriebe verzichtet werden. Bei einer kleinen Exzentrizität wird dabei eine grosse Untersetzung bereitgestellt. Nimmt das Mass der Exzentrizität zu, so nimmt die Untersetzung ab.

In anderen Ausführungsbeispielen ist die Ausnehmung 71 exzentrisch zum Innenraum 70 angeordnet. Dadurch liegt das Wälzmutterlager 4 in radialer Richtung exzentrisch zum Innenraum 70 bzw. zur Spindel 2, welche durch den Innenraum 70 verläuft. In diesem Ausführungsbeispiel wird die Exzentrizität demnach durch die exzentrische Anordnung und durch das Federmittel 3 erzeugt.

Die Wälzmutter 1 kann aber nicht nur in radialer Richtung verschoben werden, sondern sie dreht sich auch relativ zum Gehäuse 7, so dass die Wälzbewegung zwischen Spindel 2 und Wälzmutter 1 entsteht. Zudem kann sich auch der Aussenring 41 des Wälzmutterlagers 4 im Innenraum 71 relativ zum Gehäuse drehen. Dadurch werden Laufgeräusche gedämpft und die Erzeugung von Einlaufmarken auf den Gewindeflanken vermindert, was in einer Erhöhung der Lebensdauer resultiert. An dieser Stelle wird angemerkt, dass die Wälzvorgänge bzw. Abrollvorgänge direkt über Kopf- und Fusskreisdurchmesser aber auch über die Flanken der entsprechenden Gewinde vorgenommen werden können.

In der Figur 1 ist zudem der Kraftfluss KF vom Wälzelement auf die Spindel 1 dargestellt. Unter dem Kraftfluss KF wird dabei die Leitung der Kraft F vom Gehäuse 7 über das Wälzelement auf die Spindel 2 verstanden. Die Kraft F wird über das Gehäuse 7 zur Ausnehmung 71 geleitet. Über die Oberfläche 73 und über die Scheibe 80 wird die Kraft dann auf den Aussenring 41 des Wälzmutterlagers 4 geleitet. Der Kraftfluss im Wälzmutterlager 4 erfolgt vom Aussenring 41 über den Wälzkörper 42 auf den Innenring 40. Vom Innenring 40 geht die Kraft über die Wälzmutter 1 auf die Spindel 2 über.

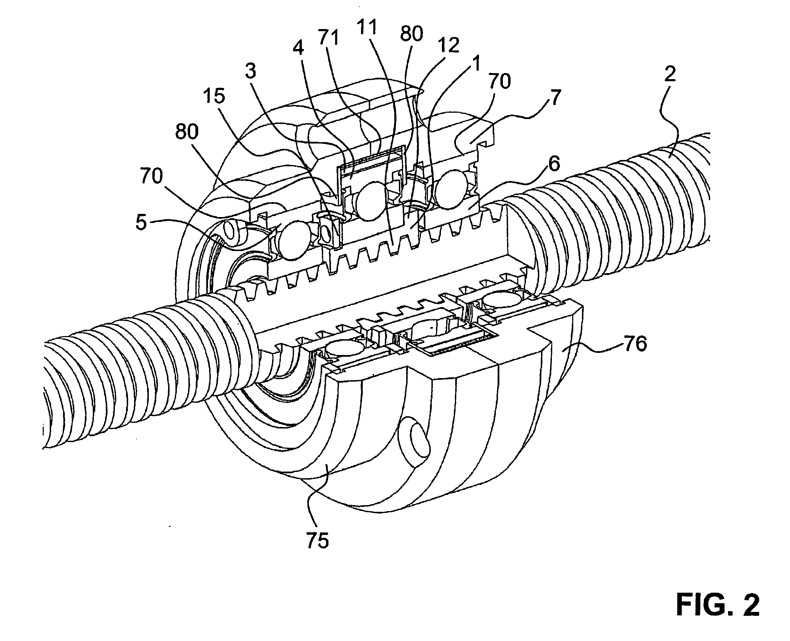

Die Figur 2 zeigt eine geschnittene Perspektiv-Darstellung des ersten Ausführungsbeispiels, wobei hier die Anordnung der entsprechenden Teile, wie oben beschrieben, noch etwas klarer wird.

Die Figur 3 zeigt eine Schnittdarstellung des ersten Ausführungsbeispiels, wobei der Schnitt senkrecht zur Mittelachse verläuft. In dieser Ansicht kann denn auch die Exzentrizität E zwischen Wälzmutter 1 bzw. Wälzmutterlager 4 und Spindel 2 erkannt werden. Unter der Exzentrizität E wird dabei der Versatz der Mittelachse 10 der Wälzmutter 1 und der Mittelachse 20 der Spindel 2 verstanden.

Ebenfalls kann in dieser Darstellung die Anordnung des Federmittels 3 gut erkannt werden. Das Federmittel 3 ist derart ausgebildet, dass die radiale Kraft über ein Kreissegment mit einem Öffnungswinkel α auf den Aussenring 41 des Walzmutterlagers 4 aufgebracht wird. Vorzugsweise ist der Öffnungswinkel α zwischen 30° und 160°, insbesondere zwischen 45° und 145°. In anderen Ausführungsformen kann der Öffnungswinkel auch weniger als 30°, insbesondere 5° betragen. Dies würde dann einen maximalen Bereich von 5° bis 160° ergeben. Demnach ist das Federmittel 3 nur über einen definierten Winkelbereich wirksam. Sofern der Öffnungswinkel grösser als 160° gewählt wird, werden die schwingungsdämpfenden Eigenschaften des Wälzelementes besser, die radialen Anpresskräfte allerdings nicht grösser.

Ferner wird eine Winkelhalbierende W angegeben, welche senkrecht zu den Mittelachsen 10, 20 und durch die beiden Mittelachsen 10 und 20 verläuft. Die Winkelhalbierende W teilt den Öffnungswinkel α in zwei gleiche Teile.

Das Federmittel 3 ist vorzugsweise derart ausgebildet, dass die Federkraft über den Umfang bzw. den Öffnungswinkel α (oder das Betriebssegment) variabel ist. Vorzugsweise ist steigt die Federkraft vom Beginn des Öffnungswinkels α in Richtung der Winkelhalbierende W an, so dass die Federkraft dort ihr Maximum erreicht, wobei die Kraftresultierende zentripetal und senkrecht zu den beiden Mittelachsen 10, 20 verläuft. Das heisst mit anderen Worten, dass die Federkraft ihr Maximum auf der Gerade (i.e. Winkelhalbierende W), welche senkrecht durch die beiden Mittelachsen 10, 20 verläuft, erreicht. Die Resultierende der Federkraft verläuft koaxial zur Winkelhalbierenden W. Dadurch wird sichergestellt, dass die Federkraft immer in Richtung der Exzentrizität verläuft. Ferner dient die Anordnung des Federmittels 3 auch als Dämpfungselement.

Das Federmittel 3 kann verschiedenartig ausgebildet sein. Ein beispielhaftes Federmittel 3 wird in der Figur 3 gezeigt. Das Federmittel 3 umfasst vorzugsweise einen ersten Führungsabschnitt 30, einen Federabschnitt 31 und einen zweiten Führungsabschnitt 32. Die Abschnitte sind dabei so angeordnet, dass der Federabschnitt 31 zwischen dem ersten Führungsabschnitt 30 und dem zweiten Führungsabschnitt 32 zu liegen kommt. Die beiden Führungsabschnitte 30, 31 sind vorzugsweise als ebene Bänder ausgebildet. In eingebautem Zustand sind die ebenen Bänder gewölbt oder krumm oder kreissegmentiert. Unter einem Band wird ein Quader verstanden, dessen eine Kantenlänge (z. B. die Breite) um ein vielfaches kleiner ist, als die anderen beiden Kantenlängen (z. B. die Länge und die Höhe). Die Führungsabschnitte 30, 31 erleichtern das Positionieren der Feder in der Ausnehmung 71 und bestimmen die Toleranz der Scheiben 80 zum äusseren Lagerring 41. Die beiden Führungsabschnitte 31, 32 können zudem als Distanzring zwischen der Ausnehmung 71 und dem Aussenring 41 des Lagers 4 wirken.

Der Federabschnitt 31 ist hier gewellt ausgebildet und kann daher auch als Wellblattfeder bezeichnet werden. Die Wellen 33 sind dabei derart angeordnet, dass sie sich in Längsrichtung des Bandes gesehen links und rechts über die beiden Führungsabschnitte 30, 31 erstrecken. Der Federabschnitt 31 arbeitet somit zwischen den Enden der Feder 3. In anderen Ausführungsformen kann der Federabschnitt auch einseitig vorgesehen und angeordnet sein.

Die gesamte Länge der Feder 3 ist vorzugsweise derart bemessen, dass die Länge dem 1,5-fachen Umfang Aussenringes 41 des Lagers 4 entspricht. Die Länge des Federabschnittes 31 entspricht dem Umfang des Kreissegmentes, welches durch den Öffnungswinkel α definiert ist. Demnach ergibt sich auch die Länge des ersten Führungsabschnittes 30 und des zweiten Führungsabschnittes 32, welche sich zusammen über ein Kreissegment erstrecken, welches einen Öffnungswinkel von 360°-α aufweist. Vorzugsweise kann die Feder 3 auch etwas kleiner ausgebildet sein, so dass im eingebauten Zustand zwischen dem ersten Führungsabschnitt 30 und dem zweiten Führungsabschnitt 32 ein Zwischenraum entsteht. Weiterhin können zur Anpassung der Federkennlinie unterschiedliche Wellen und funktionsgleiche Federwege vorgesehen werden.

In alternativen Ausführungsbeispielen kann die Länge der Feder 3 bzw. des Federmittels 3 auch grösser als der Umfang des Lagers sein. Hierbei sind der erste Führungsabschnitt 30 und/oder der zweite Führungsabschnitt 32 entsprechend länger ausgebildet. Dabei umschlingt die Feder 3 die Wälzmutter 1.

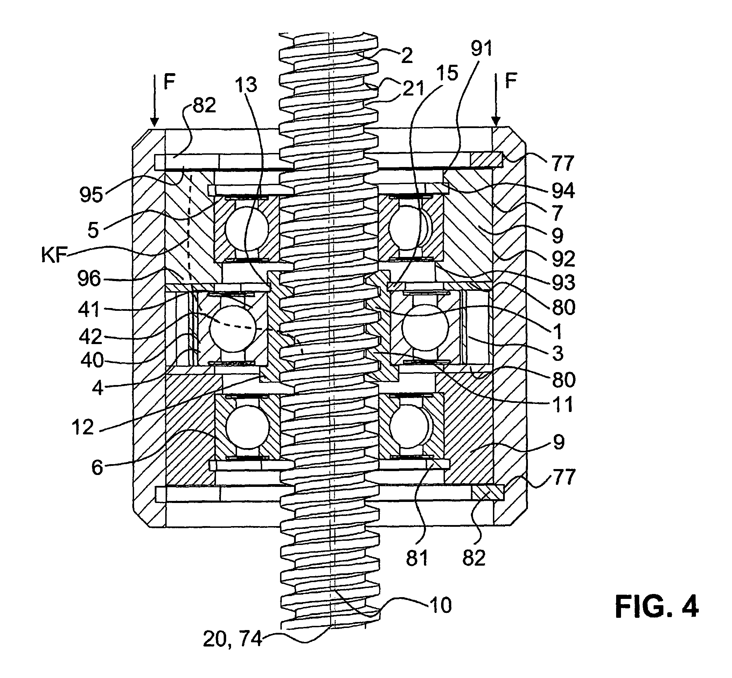

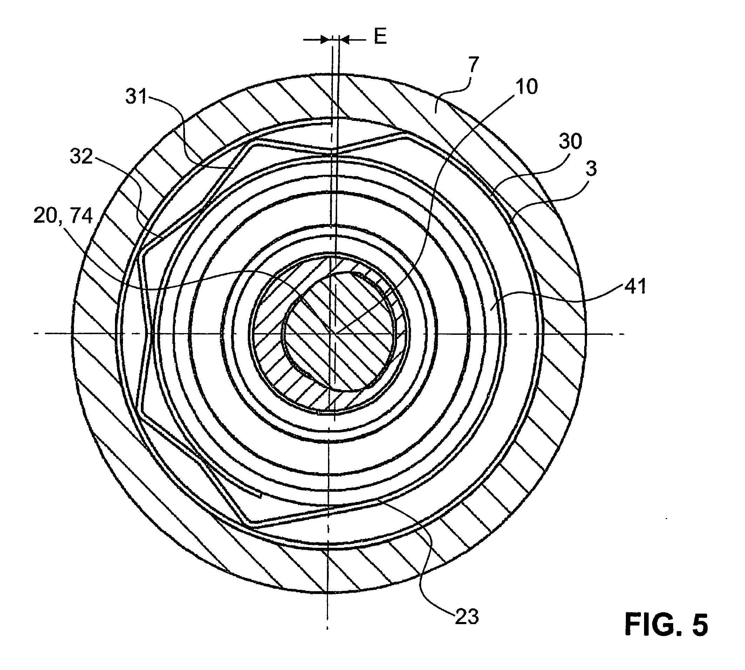

Die Figuren 4 und 5 zeigen ein zweites Ausführungsbeispiel eines Getriebes, beziehungsweise Wälzelementes. In diesem Ausführungsbeispiel hat das Gehäuse 7 die Form eines Hohlzylinders. Unter einem Hohlzylinder wird ein zylindrischer Körper mit einer zylindrischen Öffnung verstanden, welche sich entlang der Mittelachse des zylindrischen Körpers durch denselben erstreckt. Sowohl Öffnung als auch Körper haben hier eine kreisrunde Querschnittsfläche. Die genannte Öffnung bildet dabei den Innenraum 70, welcher hier mit einem konstanten Durchmesser durch das Gehäuse 7 verläuft. Der Innenraum 70 dient wiederum der Aufnahme der oben schon genannten Komponenten, insbesondere für die Wälzmutter 1, das Wälzmutterlager 4, das Federelement 3, und die Stützlager 5, 6.

Zusätzlich zu den oben genannten Komponenten werden in diesem Ausführungsbeispiel zwei Lageraufnahmen 9 in den Innenraum 70 eingesetzt. Die Lageraufnahmen 9 dienen im Wesentlichen der Aufnahme der beiden Stützlager 5, 6, über welche die Spindel 2 im Gehäuse 7 zentriert wird, und weisen eine identische Gestalt auf Die Lageraufnahme 9 ist ebenfalls als Hohlzylinder ausgebildet und umfasst eine zylindrische Innenwand 91 und eine zylindrische Aussenwand 92. Das Lager wird über einen Flansch 93 und einen in einem Einstich 94 angeordneten Sicherungsring 81 in axialer Richtung gesichert. Ferner weist die Lageraufnahme 9 zwei Stirnflächen 95 bzw. 96 auf, welche die Lageraufnahme 9 in axialer Richtung begrenzen.

Im vorliegenden Ausführungsbeispiel sind zwei Lageraufnahmen 9 beabstandet voneinander im Innenraum 70 des Gehäuses 7 angeordnet. Zwischen den beiden Lageraufnahmen 9 befindet sich wiederum die Anordnung der Wälzmutter 1 mit dem Wälzmutterlager 4 und dem Federmittel 3. Dabei stellen die Stirnseiten 96 und die Wand des Innenraumes 70 eine Ausnehmung 71 bereit, welche der Aufnahme des Federelementes 3 und des Wälzmutterlagers 4 dienen. Zwischen den Stirnseiten 96 und dem Aussenring 41 des Wälzmutterlagers 4 können wiederum Scheiben 80 angeordnet werden. In axialer Richtung werden die eben genannten Elemente durch die Stirnseiten 96 der beiden Lageraufnahmen 9 gelagert. Die Lageraufnahmen 9 werden ihrerseits durch Sicherungsringe 82 (Normteile), welche in Einstiche 77 im Gehäuse eingelassen sind, in axialer Richtung gesichert. Alternativ können die Enden des Gehäuses 7 mittels einer Börderlung mechanisch umgeformt werden. Dabei werden Teile der Enden des Gehäuses 7 mechanisch in Richtung des Innenraumes 70 umgeformt, so dass eine Art Flansch entsteht, welcher in den Innenraum 70 ragt.

Dieses zweite Ausführungsbeispiel hat den Vorteil, dass das Gehäuse 7 besonders kosteneffizient hergestellt werden kann und dass die Montage des Wälzelementes äusserst einfach ist. Als Gehäuse 7 dient dabei ein genormtes Rundrohr, welches auf die richtige Länge abgelängt wird oder auch ein gleichartiges tiefgezogenes Bauteil. Nach dem Ablängen können die Einstiche 77 auf einer Drehbank gefertigt werden. Die Montage der einzelnen Komponenten innerhalb des Gehäuses 7 erfolgt ebenfalls in einfacher Art und Weise. In einem ersten Schritt wird eine Lageraufnahme 9 und der Sicherungsring 82 platziert. In einem zweiten Schritt folgt die Scheibe 80, zusammen mit der Wälzmutter 1 und dem Wälzmutterlager 4. Anschliessend kann das Federelement 3 eingelegt werden. Als letzter Schritt wird eine weitere Scheibe 80 und die noch fehlende Lageraufnahme 9 eingelegt und mit dem Sicherungsring 82 gesichert.

Die Figur 5 zeigt das zweite Ausführungsbeispiel in einer Schnittdarstellung, wobei der Schnitt senkrecht zur Mittelachse verläuft. An dieser Stelle wird insbesondere auf das Federelement hingewiesen, welches hier derart ausgebildet ist, dass sowohl der erste Führungsabschnitt 30 als auch der zweite Führungsabschnitt 32 länger ausgebildet sind, als oben beschrieben. Beide Führungsabschnitte weisen eine Länge auf, welche etwa dem Umfang des Aussenringes 41 entsprechen. Dies erleichtert das Einsetzen der Feder 3.

In allen Ausführungsbeispielen ist die Wälzmutter 1 vorzugsweise aus Kupfer-, Zink-, und Zinn-Legierungen oder aus einem hochwertigen und verschleissfestem Stahl, insbesondere ein gehärteter Stahl gefertigt. Andere Materialien, wie Hartmetalle oder andere Hartstoffe, sind ebenfalls einsetzbar.. Die Spindel 2 ist vorzugsweise ebenfalls aus einem solchen Stahl.

Die vom Getriebe angehobene Last ist abhängig von diversen Parametern, wie beispielsweise von der Länge und vom Durchmesser der Spindel.

Zusammenfassend kann in einer allgemeinen Weise gesagt werden, dass eine Wälzmutter oder ein Wälzelement bzw. ein Getriebe dadurch gebildet wird, dass eine normale Gewindemutter 1, deren Gewindekopf- und Fusskreisdurchmesser um einen definierten Betrag grösser als die der verwendeten korrespondierenden Gewindespindel 2 sind und in einer Drehbewegung zusammenwirken. Die Gewindemutter 1 muss dabei mit ihrer, zur Mittelachse der Spindel parallel geführten eigenen Mittelachse derart gehalten werden, dass sich in einem definierten, radial orientierten Winkelbereich an nur einer Stelle ihrer Peripherie eine, über die gesamte Lebensdauer der Einrichtung näherungsweise konstante, kraft- und formschlüssige Flankenberührung ergibt.

Diese einseitige Berührung unter konstanter Krafteinwirkung macht eine normale Gewindemutter 1 mit Relativbewegung zur Spindel 2 zu einer abrollenden Wälzmutter ohne Relativbewegung zur Spindel. Dabei wirken alle Gewindegänge ebendieser Spindel nunmehr wie die Schrägverzahnung eines Zahnrades, das stufenlos und kontinuierlich an einer immer anderen Stelle in die innere Schrägverzahnung greifen kann, die aus dem Innengewinde der Wälzmutter gebildet wird.

In einer weiteren alternativen Ausfiihrungsform kann die Exzentrizität zwischen Spindel 2 und Wälzmutter 1 durch die Anordnung eines sichelförmigen Elementes im Gehäuse erzielt werden. Alternativ kann auch der Aufnahmeraum 71 exzentrisch zum Innenraum 70 angeordnet sein. Diese vordefinierte Exzentrizität unterstützt das Federmittel 3 bei der Bereitstellung der Exzentrizität vornehmlich bei grossen Lasten und Radialkräften.

### Bezugszeichenliste

- 1: Wälzmutter
- 2: Spindel
- 3: Feder
- 4: Wälzmutterlager
- 5: erstes Stützlager
- 6: zweites Stützlager
- 7: Gehäuse
- 8: Scheibe
- 9: Lageraufnahme
- 10: Mittelachse Innengewinde
- 11: Innengewinde
- 12: Flansch
- 13: Einstich
- 14: Mantelfläche
- 15: Sicherungsring
- 20: Mittelachse
- 21: Aussengewinde
- 30: erster Führungsabschnitt
- 31: gewellter Abschnitt, Federabschnitt
- 32: zweiter Führungsabschnitt
- 40: Innenring
- 41: Aussenring
- 42: Wälzkörper
- 50: Innenring
- 51: Aussenring
- 52: Wälzkörper
- 60: Innenring
- 61: Aussenring
- 62: Wälzkörper
- 70: Innenraum
- 71: Ausnehmung, umlaufender Kanal
- 72: Mantelfläche
- 73: Oberflächen
- 74: Innenraumachse
- 75: Oberteil
- 76: Unterteil
- 77: Einstich
- 80: Scheibe
- 81: Sicherungsring
- 82: Sicherungsringe
- 91: Innenwand
- 92: Aussenwand
- 93: Flansch
- 94: Einstich
- 96: Stirnseite
- E: Exzentrizität
- F: Last
- W: Winkelhalbierende
- α: Öffnungswinkel

## Patentansprüche

1. Wälzelement für eine Arbeits- oder Stellmechanik umfassend eine Wälzmutter (1) mit einer Mittelachse (10) und einem koaxial dazu verlaufenden Innengewinde (11) zur Interaktion mit einem Aussengewinde (21) einer Spindel (2), ein Wälzmutterlager (4) zur Lagerung der Wälzmutter (1) und ein Gehäuse (7) zur Aufnahme des Wälzmutterlagers (4), wobei das Gehäuse (7) einen Innenraum (70) mit einer Innenraumachse (74) umfasst, wobei eine Spindel (2) koaxial zur Innenraumachse (74) durch diesen Innenraum (70) hindurchführbar ist, wobei ein Federmittel (3) zwischen Gehäuse (7) und Wälzmutterlager (4) angeordnet ist, dessen resultierende Federkraft einseitig in radialer Richtung über das Wälzmutterlager (4) auf die Wälzmutter (1) wirkt, so dass die Mittelachse (10) der Wälzmutter (1) exzentrisch zur Innenraumachse (74) und demnach zur Spindel (2) liegt, **dadurch gekennzeichnet, dass** das Federmittel (3) mindestens einen Federabschnitt (31) und einen Führungsabschnitt (30, 32) umfasst, wobei der Federabschnitt (31) eine Vielzahl von federnden Wellen (33) umfasst.

2. Wälzelement nach Anspruch 1, **dadurch gekennzeichnet, dass** der Führungsabschnitt im wesentlichen als flaches Band ausgebildet ist.

3. Wälzelement nach Anspruch 2, **dadurch gekennzeichnet, dass** das flache Band eine Hauptebene darstellt und wobei sich die federnden Wellen (33) über mindestens eine Seite dieser Hauptebene auslenken.

4. Wälzelement nach einem der Ansprüche 1 bis 3, **dadurch gekennzeichnet, dass** das Gehäuse (7) eine Ausnehmung (71) umfasst, in welcher Ausnehmung (71) Teile des Wälzmutterlagers (4), insbesondere ein Aussenring (41) angeordnet sind, wobei die Ausnehmung (71) exzentrisch zur Innenraumachse (74) angeordnet ist, so dass die Exzentrizität des Wälzmutterlagers (4) und der Wälzmutter (1) zur Spindel (2) durch die exzentrische Anordnung des Wälzmutterlagers (4) und durch das Federmittel (3) erzielt wird.

5. Wälzelement nach einem der Ansprüche 1 bis 3 **dadurch gekennzeichnet, dass** das Gehäuse (7) eine Ausnehmung (71) umfasst, in welcher Ausnehmung (71) Teile des Wälzmutterlagers (4), insbesondere ein Aussenring (41), angeordnet sind, wobei die Ausnehmung (71) koaxial zur Innenraumachse (74) angeordnet ist, so dass die Exzentrizität des Wälzmutterlagers (4) und der Wälzmutter (1) zur Spindel (2) nur durch das Federmittel (3) erzielt wird.

6. Wälzelement nach einem der Ansprüche 1 bis 5, **dadurch gekennzeichnet, dass** das Federmittel (3) derart ausgebildet ist, dass die Federkraft über ein Kreissegment mit einem Öffnungswinkel von 30° bis 160°, insbesondere 45° bis 145°, auf das Wälzmutterlager (4) aufgebracht wird.

7. Wälzelement nach einem der vorhergehenden Ansprüche, **dadurch gekennzeichnet, dass** der Kraftfluss (KF) einer Lasteinwirkung (F) auf das Gehäuse (7) vom Gehäuse (7) über das Wälzmutterlager (4) auf die Wälzmutter (1) und von der Wälzmutter (1) auf die Spindel (2) geleitet wird.

8. Wälzelement nach einem der vorhergehenden Ansprüche, **dadurch gekennzeichnet, dass** das Wälzmutterlager (4) im Gehäuse (7) schwimmend gelagert ist und daher senkrecht zur Innenraumachse (74) bezüglich dem Gehäuse (7) verschiebbar ist, so dass aufgrund der radialen Federkraft der Federmittel (3) die Wälzmutter (4) konstant an einer Spindel (2) angedrückt wird.

9. Wälzelement nach einem der vorhergehenden Ansprüche, **dadurch gekennzeichnet, dass** das Wälzmutterlager (4) ein Wälzlager oder ein Gleitlager ist, welches bezüglich der Innenraumachse (74) axiale und/oder radiale Kräfte aufnehmen kann.

10. Wälzelement nach einem der vorhergehenden Ansprüche, **dadurch gekennzeichnet, dass** das Wälzmutterlager (4) mindestens einen Innenring (40) und einen Aussenring (41) umfasst, welche relativ zueinander drehbar sind, wobei der Aussenring (41) im Gehäuse (7) gelagert ist, so dass eine Axialkraft von Gehäuse (7) auf den Aussenring (41) übertragbar ist, und wobei der Innenring (40) mit der Wälzmutter (1) derart verbunden ist, dass eine Axialkraft übertragbar ist.

11. Wälzelement nach einem der Ansprüche 4 oder 5, **dadurch gekennzeichnet, dass** zwischen dem Innenraum (70) oder der Ausnehmung (71) des Gehäuses (7) und dem Aussenring (41) des Wälzmutterlagers (4) ein Zwischenraum vorhanden ist, in welchem Zwischenraum das Federmittel (3) angeordnet ist.

12. Wälzelement nach einem der Ansprüche 4 oder 5, **dadurch gekennzeichnet, dass** die Ausnehmung (71) exzentrisch zum Innenraum (70) im Gehäuse (7) angeordnet ist, oder dass ein sichelförmiges Element in der Ausnehmung platziert ist, so dass eine exzentrische Ausnehmung entsteht, wobei der Grad der Exzentrizität zusätzlich durch das Federmittel (3) erhöht wird.

13. Getriebe zur Umwandlung einer Drehbewegung in eine Längsbewegung, **dadurch gekennzeichnet, dass** das Getriebe ein Wälzelement nach einem der vorhergehenden Ansprüche und eine Spindel (2) umfasst, wobei die Wälzmutter (1) ein Gewinde aufweist, welches mit der Spindel (2) im Eingriff ist.

14. Getriebe nach Anspruch 13, **dadurch gekennzeichnet, dass** das Innengewinde (11) der Wälzmutter (1) einen grösseren Nenndurchmesser als das Aussengewinde (22) der Spindel bei gleicher Gewindetiefe aufweist, so dass die Wälzmutter (1) in radialer Richtung bezüglich der Spindel (2) verschiebbar ist.

15. Getriebe nach einem der Ansprüche 13 oder 14, **dadurch gekennzeichnet, dass** der Kerndurchmesser des Innengewindes (11) der Wälzmutter (1) einen geringeren Durchmesser als das Aussengewinde (22) der Spindel aufweist, und dass die Wälzmutter (1) in radialer Richtung bezüglich des Spindelgewindes (21) verschiebbar ist.

16. Getriebe nach einem der Ansprüche 13 bis 15, **dadurch gekennzeichnet, dass** der Nenndurchmesser des Aussengewindes (22) der Spindel (2) auf dem Nenndurchmesser der Wälzmutter (1) in radialer Richtung bezüglich der Spindel (2) abrollt.

17. Getriebe nach einem der Ansprüche 13 bis 16, **dadurch gekennzeichnet, dass** das Innengewinde (11) der Wälzmutter (1) mit seinem Kerndurchmesser auf dem Kerndurchmesser des Aussengewindes (22) der Spindel abrollt und die Wälzmutter (1) in radialer Richtung bezüglich der Spindel (2) versetzt ist.

18. Getriebe nach einem der Ansprüche 13 bis 17, **dadurch gekennzeichnet, dass** das Innengewinde (11) der Wälzmutter (1) im wesentlichen spielfrei auf einen Wälzkreis abrollt der auf den Flanken des Aussengewindes (22) der Spindel (2) liegt.

19. Getriebe nach einem der Ansprüche 13 bis 18, **dadurch gekennzeichnet, dass** das Innengewinde (11) der Wälzmutter (1) sowie das Außengewinde der Gewindespindel (22) geringere Abmessungen besitzen als die halbe Steigung ausmacht.

20. Getriebe nach einem der Ansprüche 13 bis 18, **dadurch gekennzeichnet, dass** das Innengewinde (11) der Wälzmutter (1) sowie das Außengewinde der Gewindespindel (22) definiert größere Abmessungen besitzen als die halbe Steigung ausmacht.

## Claims

1. Rolling element for an operating or actuating mechanism, comprising a drive nut (1) having a central axis (10) and an internal thread (11), extending coaxially therewith, for interacting with an external thread (21) on a spindle (2), a drive nut bearing (4) for mounting the drive nut (1) and a housing (7) for accommodating the drive nut bearing (4), wherein the housing (7) comprises an interior space (70) having an interior space axis (74), wherein a spindle (2) is guidable through this interior space (70) coaxially with the interior space axis (74), wherein a spring means (3) is arranged between the housing (7) and the drive nut bearing (4), the resulting spring force of said spring means (3) acting on the drive nut (1) on one side in the radial direction via the drive nut bearing (4), so that the central axis (10) of the drive nut (1) is located eccentrically with respect to the interior space axis (74) and accordingly with respect to the spindle (2), **characterized in that** the spring means (3) comprises at least one spring portion (31) and a guide portion (30, 32), wherein the spring portion (31) comprises a multiplicity of resilient undulations (33).

2. Rolling element according to Claim 1, **characterized in that** the guide portion is configured substantially as a flat strip.

3. Rolling element according to Claim 2, **characterized in that** the flat strip represents a main plane and wherein the resilient undulations (33) are deflected via at least one side of this main plane.

4. Rolling element according to one of Claims 1 to 3, **characterized in that** the housing (7) comprises a recess (71), in which recess (71) parts of the drive nut bearing (4), in particular an outer ring (41), are arranged, wherein the recess (71) is arranged eccentrically with respect to the interior space axis (74), and so the eccentricity of the drive nut bearing (4) and of the drive nut (1) with respect to the spindle (2) is achieved by the eccentric arrangement of the drive nut bearing (4) and by the spring means (3).

5. Rolling element according to one of Claims 1 to 3, **characterized in that** the housing (7) comprises a recess (71), in which recess (71) parts of the drive nut bearing (4), in particular an outer ring (41), are arranged, wherein the recess (71) is arranged coaxially with the interior space axis (74), and so the eccentricity of the drive nut bearing (4) and of the drive nut (1) with respect to the spindle (2) is achieved only by the spring means (3).

6. Rolling element according to one of Claims 1 to 5, **characterized in that** the spring means (3) is configured such that the spring force is applied to the drive nut bearing (4) via a segment of a circle having an opening angle of 30° to 160°, in particular 45° to 145°.

7. Rolling element according to one of the preceding claims, **characterized in that** the flux of force (KF) of a load action (F) on the housing (7) is directed from the housing (7) to the drive nut (1) via the drive nut bearing (4) and from the drive nut (1) to the spindle (2) .

8. Rolling element according to one of the preceding claims, **characterized in that** the drive nut bearing (4) is mounted in a floating manner in the housing (7) and therefore is displaceable perpendicularly to the interior space axis (74) with regard to the housing (7), so that, on account of the radial spring force of the spring means (3), the drive nut (1) is pressed constantly against a spindle (2).

9. Rolling element according to one of the preceding claims, **characterized in that** the drive nut bearing (4) is a rolling bearing or a plain bearing which can absorb axial and/or radial forces with regard to the interior space axis (74).

10. Rolling element according to one of the preceding claims, **characterized in that** the drive nut bearing (4) comprises at least one inner ring (40) and one outer ring (41) which are rotatable in relation to one another, wherein the outer ring (41) is mounted in the housing (7) so that an axial force is transmittable from the housing (7) to the outer ring (41), and wherein the inner ring (40) is connected to the drive nut (1) such that an axial force is transmittable.

11. Rolling element according to either of Claims 4 and 5, **characterized in that** an intermediate space is present between the interior space (70) or the recess (71) in the housing (7) and the outer ring (41) of the drive nut bearing (4), the spring means (3) being arranged in said intermediate space.

12. Rolling element according to either of Claims 4 and 5, **characterized in that** the recess (71) is arranged in the housing (7) eccentrically with respect to the interior space (70), or **in that** a sickle-shaped element is placed in the recess so as to produce an eccentric recess, wherein the degree of eccentricity is increased additionally by the spring means (3).

13. Gear mechanism for converting a rotational movement into a longitudinal movement, **characterized in that** the gear mechanism comprises a rolling element according to one of the preceding claims and a spindle (2), wherein the drive nut (1) has a thread which is in engagement with the spindle (2).

14. Gear mechanism according to Claim 13, **characterized in that** the internal thread (11) of the drive nut (1) has a greater nominal diameter than the external thread (22) of the spindle, with the same depth of thread, and so the drive nut (1) is displaceable in the radial direction with regard to the spindle (2).

15. Gear mechanism according to either of Claims 13 and 14, **characterized in that** the core diameter of the internal thread (11) of the drive nut (1) has a smaller diameter than the external thread (22) of the spindle, and **in that** the drive nut (1) is displaceable in the radial direction with regard to the spindle thread (21).

16. Gear mechanism according to one of Claims 13 to 15, **characterized in that** the nominal diameter of the external thread (22) of the spindle (2) rolls on the nominal diameter of the drive nut (1) in the radial direction with regard to the spindle (2).

17. Gear mechanism according to one of Claims 13 to 16, **characterized in that** the internal thread (11) of the drive nut (1) rolls by way of its core diameter on the core diameter of the external thread (22) of the spindle and the drive nut (1) is moved in the radial direction with regard to the spindle (2).

18. Gear mechanism according to one of Claims 13 to 17, **characterized in that** the internal thread (11) of the drive nut (1) rolls in a substantially play-free manner on a pitch circle which is located on the flanks of the external thread (22) of the spindle (2).

19. Gear mechanism according to one of Claims 13 to 18, **characterized in that** the internal thread (11) of the drive nut (1) and the external thread of the threaded spindle (22) have smaller dimensions than is made up by half the pitch.

20. Gear mechanism according to one of Claims 13 to 18, **characterized in that** the internal thread (11) of the drive nut (1) and the external thread of the threaded spindle (22) have specifically larger dimensions than is made up by half the pitch.

## Revendications

1. Elément de roulement pour un mécanisme de travail ou de réglage comprenant un écrou de roulement (1) avec un axe central (10) et un filet intérieur (11) s'étendant coaxialement à celui-ci pour une interaction avec un filet extérieur (21) d'une broche (2), un palier d'écrou de roulement (4) pour l'appui de l'écrou de roulement (1) et un boîtier (7) destiné à contenir le palier d'écrou de roulement (4), dans lequel le boîtier (7) présente une chambre intérieure (70) avec un axe de chambre intérieure (74), dans lequel une broche (2) peut être conduite à travers cette chambre intérieure (70) coaxialement à l'axe de chambre intérieure (74), dans lequel il se trouve entre le boîtier (7) et le palier d'écrou de roulement (4) un élément de ressort (3), dont la force élastique résultante agit d'un seul côté sur l'écrou de roulement (1) en direction radiale via le palier d'écrou de roulement (4), de telle manière que l'axe central (10) de l'écrou de roulement (1) soit excentrique par rapport à l'axe de chambre intérieure (74) et dès lors à la broche (2), **caractérisé en ce que** l'élément de ressort (3) comprend au moins une partie de ressort (31) et une partie de guidage (30, 32), dans lequel la partie de ressort (31) comprend une pluralité d'ondes de ressort (33).

2. Elément de roulement selon la revendication 1, **caractérisé en ce que** la partie de guidage se présente essentiellement sous la forme d'une bande plate.

3. Elément de roulement selon la revendication 2, **caractérisé en ce que** la bande plate représente un plan principal et dans lequel les ondes de ressort (33) s'écartent sur au moins un côté de ce plan principal.

4. Elément de roulement selon l'une quelconque des revendications 1 à 3, **caractérisé en ce que** le boîtier (7) comporte un évidement (71), évidement (71) dans lequel sont disposées des parties du palier d'écrou de roulement (4), en particulier une bague extérieure (41), dans lequel l'évidement (71) est disposé de façon excentrique par rapport à l'axe de chambre intérieure (74), de telle manière que l'excentricité du palier d'écrou de roulement (4) et de l'écrou de roulement (1) par rapport à la broche (2) soit obtenue par la disposition excentrique du palier d'écrou de roulement (4) et par l'élément de ressort (3).

5. Elément de roulement selon l'une quelconque des revendications 1 à 3, **caractérisé en ce que** le boîtier (7) comporte un évidement (71), évidement (71) dans lequel sont disposées des parties du palier d'écrou de roulement (4), en particulier une bague extérieure (41), dans lequel l'évidement (71) est disposé de façon coaxiale à l'axe de chambre intérieure (74), de telle manière que l'excentricité du palier d'écrou de roulement (4) et de l'écrou de roulement (1) par rapport à la broche (2) soit produite uniquement par l'élément de ressort (3).

6. Elément de roulement selon l'une quelconque des revendications 1 à 5, **caractérisé en ce que** l'élément de ressort (3) est réalisé de telle manière que la force élastique soit appliquée au palier d'écrou de roulement (4) sur un segment de cercle présentant un angle d'ouverture de 30° à 160°, en particulier de 45° à 145°.

7. Elément de roulement selon l'une quelconque des revendications précédentes, **caractérisé en ce que** le flux de force (KF) d'une charge (F) agissant sur le boîtier (7) est conduit du boîtier (7) à l'écrou de roulement (1) via le palier d'écrou de roulement (4) et de l'écrou de roulement (1) à la broche (2).

8. Elément de roulement selon l'une quelconque des revendications précédentes, **caractérisé en ce que** le palier d'écrou de roulement (4) est disposé de façon flottante dans le boîtier (7) et est dès lors déplaçable perpendiculairement à l'axe de chambre intérieure (74) par rapport au boîtier (7), de telle manière qu'en raison de la force élastique de l'élément de ressort (3), l'écrou de roulement (1) soit appliqué constamment sur une broche (2).

9. Elément de roulement selon l'une quelconque des revendications précédentes, **caractérisé en ce que** le palier d'écrou de roulement (4) est un palier à roulement ou un palier lisse, qui peut reprendre des forces axiales et/ou radiales par rapport à l'axe de chambre intérieure (74).

10. Elément de roulement selon l'une quelconque des revendications précédentes, **caractérisé en ce que** le palier d'écrou de roulement (4) comprend au moins une bague intérieure (40) et une bague extérieure (41), qui peuvent tourner l'une par rapport à l'autre, dans lequel la bague extérieure (41) est montée dans le boîtier (7), de telle manière qu'une force axiale puisse être transmise du boîtier (7) à la bague extérieure (41), et dans lequel la bague intérieure (40) est assemblée à l'écrou de roulement (1) de telle manière qu'une force axiale puisse être transmise.

11. Elément de roulement selon l'une quelconque des revendications 4 ou 5, **caractérisé en ce qu'**il se trouve une chambre intermédiaire entre la chambre intérieure (70) ou l'évidement (71) du boîtier (7) et la bague extérieure (41) du palier d'écrou de roulement (4), chambre intermédiaire dans laquelle l'élément de ressort (3) est disposé.

12. Elément de roulement selon l'une quelconque des revendications 4 ou 5, **caractérisé en ce que** l'évidement (71) est disposé dans le boîtier (7) de façon excentrique par rapport à la chambre intérieure (70), ou **en ce qu'**un élément en forme de croissant est placé dans l'évidement, de telle manière qu'il se forme un évidement excentrique, dans lequel le degré de l'excentricité est encore accru par l'élément de ressort (3).

13. Entraînement destiné à la transformation d'un mouvement de rotation en un mouvement de translation, **caractérisé en ce que** l'entraînement comprend un élément de roulement selon l'une quelconque des revendications précédentes et une broche (2), dans lequel l'écrou de roulement (1) présente un filet, qui est en prise avec la broche (2).

14. Entraînement selon la revendication 13, **caractérisé en ce que** le filet intérieur (11) de l'écrou de roulement (1) présente un plus grand diamètre nominal que le filet extérieur (22) de la broche pour une même profondeur de filet, de telle manière que l'écrou de roulement (1) soit déplaçable en direction radiale par rapport à la broche (2).

15. Entraînement selon l'une quelconque des revendications 13 ou 14, **caractérisé en ce que** le diamètre de noyau du filet intérieur (11) de l'écrou de roulement (1) présente un plus petit diamètre que le filet extérieur (22) de la broche, et **en ce que** l'écrou de roulement (1) est déplaçable en direction radiale par rapport au filet de broche (21).

16. Entraînement selon l'une quelconque des revendications 13 à 15, **caractérisé en ce que** le diamètre nominal du filet extérieur (22) de la broche (2) roule sur le diamètre nominal de l'écrou de roulement (1) en direction radiale par rapport à la broche (2).

17. Entraînement selon l'une quelconque des revendications 13 à 16, **caractérisé en ce que** le filet intérieur (11) de l'écrou de roulement (1) roule avec son diamètre de noyau sur le diamètre de noyau du filet extérieur (22) de la broche et l'écrou de roulement (1) est déplacé en direction radiale par rapport à la broche (2).

18. Entraînement selon l'une quelconque des revendications 13 à 17, **caractérisé en ce que** le filet intérieur (11) de l'écrou de roulement (1) roule essentiellement sans jeu sur un cercle de roulement, qui est situé sur les flancs du filet extérieur (22) de la broche (2).

19. Entraînement selon l'une quelconque des revendications 13 à 18, **caractérisé en ce que** le filet intérieur (11) de l'écrou de roulement (1) ainsi que le filet extérieur (22) de la broche filetée présentent des dimensions inférieures à la moitié du pas.

20. Entraînement selon l'une quelconque des revendications 13 à 18, **caractérisé en ce que** le filet intérieur (11) de l'écrou de roulement (1) ainsi que le filet extérieur (22) de la broche filetée présentent des dimensions nettement supérieures à la moitié du pas.
